# EUROPEAN PATENT APPLICATION

(11) **EP 4 721 572 A1**
(43) Date of publication of application: **08.04.2026**
(21) Application number: 25300034.3
(22) Date of filing: 27.03.2025
(51) Int. Cl.: A21D 13/32, A21D 13/38, A23P 20/20, A23P 20/25

(54) **READY TO EAT BREAD CARRÉ WITH SWEET FILLING AND METHOD FOR MANUFACTURE THEREOF**

(30) Priority: 01.10.2024 GR 20240100672
(71) Applicant: KARAMOLEGOS BAKERY S.A., 19400 Koropi, Attica (GR)
(72) Inventor: Evangelou, Vasileios, GR-15236 Penteli (GR); Karamolegkos, Ilias Apostolos, GR-15237 Athens (GR)
(74) Representative: Lyberis, Nikolaos

(57) **Abstract**

The present invention concerns a bread carré (self-sealed sandwich of special technical and quality characteristics) with a sweet filling, ready to eat, with a long shelf-life at room temperature. The bread square consists of two slices of bread without crust, inside which one or more sweet fillings are placed. A sealing zone is defined around the perimeter of each slice of bread. To seal the bread square, the two sealing zones are pressed so that they are plastically deformed and, due to the water contained in the bread, they are irreversibly secured. The stability of the seal is ensured by the use of fresh bread without crust, the matching of the water activity (Aw) of the bread and the sweet filling, the absence of sweet filling between the sealed sealing zones, and the three-dimensional shaping in one or both slices of bread, a cavity in which the sweet filling is contained without leaking. Further improvement of the seal is achieved by removing air pockets between the surfaces of the bread carré materials.

## Description

### TECHNICAL FIELD

The present disclosure relates to bread carré products with sweet fillings and adjustable water activity.

### BACKGROUND

Bread has been one of the staple foods of humans in almost all societies and geographical latitudes and longitudes of the earth for about 14,000 years, according to archaeological excavations. The exact date, location and method of making bread for the first time are not known. With the findings so far, the oldest remains of bread were discovered in Jordan during the Stone Age, when our ancestors made flour from wild wheat and barley, mixed it with flour from wild plant roots, added water and baked it in a fire.

Grinding the grains and roots with stones allowed the production of fine-grained flour, which was then mixed with water to produce dough. Natural yeasts, that is, microorganisms found in the atmosphere and in the raw materials from which the flour was made, helped the dough to rise to a certain extent, and then baking the dough on the hot ashes of a hearth or on hot stones produced the bread.

These first breads helped our ancestors improve their diet, thus contributing to their development and the creation of civilization, as bread was then made when people gathered for a celebration. Typically, hunters and gatherers, these early humans made bread before the advent of agriculture, and the value of bread in their diet seems to have been the trigger for the transition to agriculture, where they began to cultivate grains using animals. They then domesticated wheat and barley, as well as other cereals, which they used either alone or in combination to produce different types of flour and bread.

Today's breads, although based on the same basic recipe, probably bear little resemblance to these first, ancient forms of bread. Both the varieties of cereals used have evolved over the centuries, and recently genetically modified grains are used in the production of flour, and the production methods have become more complex with the aim of producing a multitude of types of bread through controlled conditions, the addition of yeast and/or sourdough to ensure the repeatability of the taste, texture, etc. characteristics of the final product. This need for repeatability, as well as the creation of new types of bread, minimizing production time and reducing costs, has led the bakery industry to invent a multitude of new methods of producing bread in completely controlled conditions and using standardized raw materials (e.g. flour types P, M, A, etc.).

For example, the need to use grains with a low protein content in England in earlier decades led to the invention of the Chorleywood baking method, which achieved the use of available flours in the manufacture of fluffy and homogeneous bread, easy to slice, which in turn gave impetus to the development of the toast bread industry. The most important advantage of the Chorleywood method, however, is the drastic reduction in bread making time, from fermentation to the maturation of the dough so that it can now be baked to produce the finished bread product, thus reducing production costs. While until then the baking process until the production of dough ready for baking lasted up to 24 or more hours for sourdough breads, the Chorleywood method reduced the required time to just 3.5 hours. For this reason, the majority of bread internationally is produced using the Chorleywood method or its variations using a multitude of different raw materials.

The Chorleywood method is based on the use of mixing-kneading machines, which, however, operate at higher speeds (100 - 120rpm) and exert greater forces-pressures on the dough, transmitting energy to it at a rapid rate so that the dough develops its desired properties within a few minutes. Typically, and depending on the type of flour used, the Chorleywood method uses specialized kneaders which transfer energy of 12-13 Wh/kg of dough or even higher to the dough during the mixing of the raw materials. The kneading process depends on the total energy transfer from the mechanical kneader to the dough, which in practice corresponds to a 7'-8' (minutes) kneading time compared to 15' -20' (minutes) for conventional methods and kneaders.

The transfer of larger amounts of energy to the dough in a significantly shorter time compared to conventional methods, contributes to the rise in the temperature of the dough, resulting in the alteration of its characteristics (it becomes softer and stickier on its surface) making it more difficult to process. For this reason, the kneaders used in the Chorleywood method have double-walled glycol circulation walls which act as heat exchangers in the dough mixing vessel, maintaining a constant temperature of around 30°C. This temperature is ideal for maintaining the desired characteristics of the dough.

While conventional baking methods rely on the preparation of dough under atmospheric conditions, which allow air to be trapped in the dough, the Chorleywood method (in later improvements) uses partial vacuum conditions (i.e. lower pressure than atmospheric) during fermentation. The partial vacuum conditions cause the bread to be produced from the dough to have smaller air bubbles, which are separated from each other by thinner bread walls. The latter allow the bread to remain soft for a longer period of time due to their smaller size. This resulting structure allows the creation of fluffy bread with a uniform texture and small air bubbles, suitable for storage for longer periods until consumption.

The fluffy texture of the bread is a result of the pressures exerted by the Chorleywood method kneader on the dough, which result in the introduction of a larger amount of air to allow for faster and more efficient oxidation of the dough. The oxidation of the dough can be further enhanced by the addition of an oxidizing agent, ascorbic acid/vitamin C, which can be added to the ingredients to be fermented, and which causes the oxidation of the gluten contained in the flours but is also added to the fermentation mixture as one of its ingredients.

In addition to the oxidizing agent, the dough prepared using the Chorleywood method also contains larger amounts of water and yeast compared to conventional doughs, which also helps to reduce the fermentation time and produce fluffier bread. Small amounts of solid fats, or small amounts of oils in combination with emulsifiers, are also added to the dough ingredients to allow for a reduction in fermentation time.

Research has shown that breads and pastries produced using the Chorleywood method with milled white wheat (extraction rate - grinding degree up to 85%), yeast and water are more likely to cause Irritable Bowel Syndrome (IBS) in those who consume them compared to breads produced with 30% sourdough with a renewal (resting) time of 4 hours or conventional yeast bread with a maturation time of 16 hours. These studies provide answers to the possible causes of the sharp increase in IBS in all countries in recent decades.

Despite their popularity and the very large market share held by breads produced using the Chorleywood method, consumers often complain that these breads do not taste like bread and resemble the taste of paper, do not have the texture of bread but of a sponge, and are so fluffy that they soak very quickly from the moisture of the ingredients that are added to produce toast and sandwiches or are spread on the bread, especially if the final preparation is not consumed immediately after its preparation.

**In** particular, in the case of using a fatty or sweet spread on bread (e.g. for the preparation of ready-to-eat sandwich-type products, etc.), such as ground nut paste, this has a very low water activity, resulting in the bread, which has a high water activity, releasing free water into the spread which then contributes to the deterioration of the spread and the final product.

**In** recent decades, a very large industry of ready-to-eat sandwiches and spreads with both savory and sweet ingredients has been created. These ready-to-eat products are intended to be stored and consumed hours or even days after their production. However, this storage makes them vulnerable to spoilage and contamination by bacteria, mold, etc., making them potential risks to public health. To minimize this risk, various techniques are used, which to some extent ensure the better preservation of prefabricated products until they are consumed. Among them, are preservation in refrigerated conditions (which entails increased cost and limits their availability) or freezing (which alters the taste and texture of the products and makes them unavailable for immediate consumption), sterilization and preservation in modified atmosphere packaging (which increases their shelf life, but only by a few days), the addition of preservatives etc. additives (which alters the taste and degrades the product while potentially causing IBS and other health problems in consumers), and drying, smoking and the addition of salt or sugar as a natural preservative (which, however, alter the taste of the product and create health problems such as increased blood pressure and blood sugar, etc.).

Also, for the stability of the construction of the final, ready-to-eat sandwich product, its sealing is used with simultaneous cutting of the bread crust. Despite the widespread use of sandwich sealing by pressing the two slices of bread together, the problem of separation of the bread slices when mechanically stressed is common. This can occur both during the transportation and storage of the product (e.g. due to turbulence and due to the shrinkage of the bread by approximately 3.5% while it remains in a sealed container), and during its handling by the end consumer (e.g. due to shear force, bending and pressure). This unsealing of the secured final product creates two problems. Firstly, the qualitative degradation of the product through the visual alteration of the secured assembly of bread and sweet spread, which makes it undesirable to the consumer. Secondly, it creates discontinuity in the containment of the sweet spread within the initially secured slices of bread, with the risk of detachment or flow (depending on the fluidity) of the sweet spread from the interior of the sandwich with consequent contamination of the consumer or the environment in which the specific incident occurs.

### SUMMARY

It is clear that industrially manufactured, ready-to-eat sandwich-type sweet spread (filling) products pose many challenges for the industry and present many problems and disadvantages.

It is the purpose of the present invention to present a ready-to-eat sweet spread bread carré product with improved quality characteristics of texture, taste, increased shelf-life outside refrigeration (at room temperature), reduced time and cost of preparation, which ensure improved quality and organoleptic characteristics and a firmly secured structure against mechanical stresses.

### DETAILED DESCRIPTION

Hereinafter, the terms "spread" and "filling" are used to denote the same technical feature of the invention. That is, a pulp or paste that is deposited on the surface of a slice of bread and/or contained within the "envelope", which is formed by the two sealed slices of bread of the final "carré bread" product.

### Water Activity (Aw) and Food Shelf Life

Water activity is an index that represents the percentage of free water in food and can be measured from the water vapor pressure (P) in a sealed packaging material containing the food and from pure water at that temperature. It is defined as the ratio of the vapor pressure (P) in the food to the vapor pressure of pure water (PO) at the same temperature as the food, and is obtained from the equation Aw = P / PO.

Aw is the standard index used in the food industry to determine the necessary storage conditions of a food and its shelf life. When we calculate Aw, we are not measuring the amount of water in a food. In fact, we are measuring the "excess" amount of water that is available for use by microorganisms. Each microorganism has a minimum and optimal Aw to multiply and therefore it is important to take this into account in order to control the growth of pathogenic microorganisms, thus preventing food spoilage. At the same time, Aw can be used to control the chemical and physical stability of a food.

**Table 1** presents examples of Aw for common foods.

**Table 1: Examples of Aw for common foods.**

| **FOOD** | **Aw (at room temperature, about 25°C)** | **FOOD TYPE** |
|---|---|---|
| Pure Water | 1,00 | - |
| Wheat Flour | 0,65 | Bread |
| Yeast Bread | 0,983 | Bread |
| Sourdough Bread | 0,981 | Bread |
| Pitta Bread (Flatbread) | 0,88-0,96 | Bread |
| Koppe-style bread (fluffy bun) | 0,72 | Bread |
| Toast Bread | 0,94-0,98 | Bread |
| Breadsticks | 0,36 | Bakery/Bread Product |
| Croissant | 0,76-0,79 | Bakery/Bread Product |
| Cake | 0,81 | Bakery/Bread Product |
| Sweet, Fatty Filling (dry spread, e.g. hazelnut praline type) | 0,25 | Sweet Filling |
| Sweet, Watery Filling (fruit jam type) | 0,80-0,84 | Sweet Filling |
| Confectionery Icing | 0,78 | Sweet Filling |
| Chocolate | 0,3-0,5 | Sweet Filling |
| Nuts | 0,65-0,75 | Sweet/ Savory Filling |
| Peanut butter | 0,33 | Savory Filling |
| Fresh Meat, fish/seafood | 0,99 | Savory Filling |
| Cheese | >0,94 | Savory Filling |
| Salty Cold Cuts (e.g. salami) | 0,82 | Savory Filling |
| Boiled cold cuts (e.g. turkey) | 0,98 | Savory Filling |

**Table 1** shows that while wheat flour has a low Aw (0.65), its use in bread production with the addition of yeast, water and other additives produces bread that has a very high Aw (0.94-0.98). If the bread contains fatty substances (oil, butter, nuts, etc.) then the Aw decreases depending on the percentage of fat added. For this reason, baked goods, which generally contain butter or vegetable fats (e.g. palm oil, etc.) in the industry, have a lower Aw (0.76-0.81) than bread.

For the same reason, fatty substances used as fillings in sandwich-type products (e.g. peanut butter, salty cold cuts, etc.) have a moderate Aw of 0.33-0.82. At the same time, savory fillings with low salt content (e.g. boiled turkey and cheeses) have very high Aw (0.92-0.98).

Ingredients used as sweet fillings in sandwich products and other types of baked goods have extremely low Aw (0.25-0.50) when they have a predominantly fatty content (e.g. hazelnut praline, chocolate, etc.) or moderate Aw (0.65-0.78) when they have a predominantly watery content (e.g. nuts, confectionery glaze, etc.).

**Table 2** presents examples of Aw that allow the growth of different types of microorganisms.

**Table 2: Examples of minimum Aw that allow the growth of different types of microorganisms.**

| **MICROORGANISM** | **MINIMUM Aw FOR REPRODUCTION** |
|---|---|
| Clostridium Botulinum | 0,97 |
| Pseudomonas Fluorescens | 0,97 |
| Escherichia Coli | 0,95 |
| Clostridium Perfringens | 0,95 |
| Salmonella | 0,95 |
| Vibrio Cholerae | 0,95 |
| Clostridium Botulinum A, B | 0,97 |
| Bacillus Cereus | 0,93 |
| Listeria Monocytogenes | 0,92 |
| Bacillus Subtilis | 0,91 |
| Staphylococcus Aureus | 0,87 |
| Mold | 0,70 |
| Do not reproduce | <0,60 |

As shown in **Table 2,** most common types of microorganisms reproduce at Aw greater than 0.95 or 0.91 in some cases. Mold reproduces at Aw equal to or greater than 0.70.

These measurements indicate that foods with very high Aw allow the growth of pathogenic microorganisms, making them unfit for consumption.

Referring to **Table 1,** we can easily see that most raw materials that are commonly used in bread products, pastries and sandwich products can grow mold, while a large portion of them can also grow cultures of pathogenic microorganisms.

For this reason, it is necessary to preserve raw materials and finished products in controlled storage conditions before use/consumption, such as refrigeration or freezing, modified atmosphere, pasteurization, etc., or otherwise reduce their shelf life and/or add natural or artificial preservatives, or a combination of the above.

In general, if a product has an Aw greater than 0.85, then it is required to be refrigerated or to take another protective measure such as one or more of the above to avoid the growth of pathogenic microorganisms and/or mold.

For products with Aw 0.60-0.85, refrigeration or other measures to protect against the growth of pathogenic microorganisms and mold are not necessary but optional. In this case, however, the product will have a limited shelf life (e.g. a few days, such as 3-4) due to the presence of yeasts and some types of mold in the atmosphere.

For products with Aw less than 0.60, refrigeration or other measures to protect against the growth of pathogenic microorganisms and mold are not necessary. These products have a long shelf life (e.g. weeks or months).

In order to increase the shelf life of food products and, depending on the type of food, to avoid the need for refrigeration, food industries use some of the techniques mentioned above to ensure that their products remain safe for consumption. However, as is known to both industries and consumers, the addition of preservatives (whether natural or artificial), as well as drying and pasteurization, alter the taste, texture, organoleptic characteristics of a food and in many cases its appearance and mechanical properties.

For these reasons, it is desirable to industrially produce food products, and in particular bread and bakery products, which will have a longer shelf life than the corresponding products currently available and at the same time will preserve the taste, texture, organoleptic characteristics and mechanical properties of bread in its natural-non-industrialized form.

### Food Combinations with Different Aw

As already mentioned, water activity is an indicator that represents the percentage of free water in food, i.e. the "excess" amount of water that is available for use by microorganisms.

**In** the bakery industry, one of the most common uses of bread and other baked goods is in the production of sandwich-type products. Such a product typically consists of two slices of bread with a filling, either savory or sweet, sandwiched between them. In a variation of these products, a single slice of bread may be used on which the filling is placed.

According to the content of **Table 1,** breads and pastries have Aw 0.72-0.98 and more specifically toast bread, which is usually used in the preparation of sandwiches, has Aw 0.94-0.98 depending on the raw materials and the method of its preparation. This bread is preferred due to its characteristics, namely its light texture, its taste, its elasticity and its resistance to mechanical stress, so that it does not rub and maintains the shape of the sandwich. The bread is usually filled with a savory filling (e.g. cheeses and cold cuts) with Aw 0.82-0.98 or with a sweet filling (e.g. nut spread or chocolate) with Aw 0.25-0.84.

It is obvious that the Aw of the bread and the Aw of the filling differ, and to a large extent. It is therefore obvious that since Aw represents the percentage of free water in foods, excess water from foods with a high Aw will move to foods with a lower Aw. Given enough time, the movement of water will continue until equilibrium is reached in the Aw of the bread and the filling.

In the case where the Aw of the bread and the filling are the same or similar (such as if brie cheese is added to toasted bread), no water will move from one material to the other, or any movement will be in an amount such that it does not affect the characteristics of the product, thus maintaining the original quality of the bread and the filling.

In sandwich-type products of the form mentioned above, when the filling has a higher Aw than the bread, the latter will absorb water from the filling, resulting in the bread becoming soggy and the filling becoming dehydrated. The reverse scenario is also possible. In both cases, the result will be a change in the texture and appearance of the product, resulting in the consumer perceiving the product as either potentially hazardous to their health or as having an inferior taste. Thus, it is likely that the consumer will reject this product from future purchases, or that the seller will reject it as unsuitable before selling it. This problem concerns products that are manufactured with the aim of being stored as ready-to-eat and which, depending on their manufacturing method, can be kept in a ready-to-eat form on the shelf (with or without refrigeration).

To solve the problems presented by known sandwich-type products, the present invention relates to a newly emerging category of bread carré products (or carré for short).

Bread carré products are an emerging category of bread products which, in addition to their improved nutritional and organoleptic properties (due to the use of a larger amount of natural sourdough, etc. natural ingredients in the bread and natural ingredients in the sweet filling), also possess clearly improved technical characteristics (which are presented below), which ensure the structural stability of the bread product and its shelf life structurally, tastefully, in texture and hygienically for long periods of time (e.g. 15-25 days) outside refrigeration, at room temperature, (due to the size of the bread cells, absence of filling from the sealing zone of the bread, special sealing technique and optionally the use of modified atmosphere in a special airtight container).

Bread carré products are self-sealed and externally have the form of a sealed sandwich. Despite their external similarity to a sealed sandwich, bread carré products differ in critical parameters, both in the bread and the sweet filling (in their Aw, which is almost equal between the bread and the sweet filling due to the ingredients of each), but also in the method of sealing the bread carré (which differs due to the sealing zone, the method of filling the product with sweet filling, as well as the size of the bread cells).

### First Example of Bread Implementation for Use in Bread Carré Products with Filling, Ready to Eat

In a first example of bread and bakery product implementation, which is suitable for use in products with filling (sweet or savory), the Aw of the bread or bakery product is adjusted to 0.915-0.925 preferably 0.92 +/-0.03.

The goal is for the bread of the present example of implementation (and of the following examples of implementation) to possess special technical and qualitative characteristics which are specifically selected to make it not only suitable for use in sandwich-type products, but the only one suitable to be used in the preparation of bread carré products, as all known types of bread have a multitude of disadvantages and limitations which make them unsuitable for use in the preparation of bread carré products.

The minimum necessary ingredients for the implementation of the invention are, for bread, about 23%-50% by weight (wt.) water, while the remaining about 50%-77% by weight consists of about 26%-40% by weight natural sourdough ripening for 36-48 hours as an oxidizing agent, yeast, wheat flour, vegetable and/or animal fats, hydroscopic agents for regulating Aw by preventing water binding and salt for swelling, cohesive structure and reduction of friability and water activity. Optionally, one or more of wheat starch and fava flour, colorants, preservatives and flavorings may also be added.

The 36-48-hour natural sourdough comprises water and wheat flour in a ratio of 1:1, and yeast culture, and is included in the mixture in a ratio of approximately 26%-40% by weight, the fatty phase (i.e. animal or vegetable fats) is approximately 1.5%-20% by weight and the hydroscopic agents are sugar. The proportions of the ingredients of the mixture are selected to ensure that the produced bread product has an Aw of 0.90-0.92 and contains nutrients of approximately, per 100gr, 240 - 280 kcal of energy. 2.0 - 5.0 gr fat, of which 0.1 - 1.2 gr saturated fat, 45-54gr carbohydrates, 2.0 - 5.0 gr dietary fiber, 7.5 - 11.0 gr protein, and 1.0-1.2gr salt, as presented in Table 3. Any ratio of ingredients (raw materials) within the above % wt. limits, which ensures the above nutrients, has been calculated to also ensure the desired Aw of 0.89-0.91.

The mix (mixture) of raw materials can be varied in the proportion of the above raw materials, within the aforementioned range, with the aim of achieving the nutritional characteristics of Table 3. It is known to those skilled in the art how, based on Table 3, they can create one or more dough recipes according to the present invention, using the ingredients of the previous paragraph, without requiring experimentation beyond a usual routine of mixing known raw materials with a known nutritional value each.

**Table 3: Nutritional characteristics of bread**

| **NUTRITIONAL VALUE** | **General Exemplary Implementation (% wt.)** | **1° EXEMPLARY EMBODIMENT (% wt.)** |
|---|---|---|
| Energy | 240 - 280kcal | 250 kcal |
| Fats | 2.0 - 5.0 | 3,6 |
| of which saturated | 0,1 - 1,2 | 0,2 |
| Carbohydrates | 45 - 54 | 47,5 |
| Dietary fiber | 2,0 - 2,5 | 2,8 |
| Proteins | 7.5 - 11.0 | 9.0 |
| Salt | 1.0 - 1.2 | 1,1 |

However, what is neither known nor obvious to the person skilled in the art is the selection and combination of the above-mentioned minimum necessary raw materials and/or optional raw materials in combination with the very high percentage of slow-ripening natural sourdough and the use of vegetable and/or animal fats. The natural, naturally ripened sourdough improves the organoleptic characteristics of the final product, the taste and texture and extends the shelf life of the final product outside refrigeration, while at the same time acting as an oxidizing agent which has a rapid action allowing the fermentation of the dough according to the Chorleywood method to minimize the required fermentation and ripening time, without the addition of another oxidizing agent (such as vitamin C/ascorbic acid).

Vegetable and animal fats facilitate breadmaking by the Chorleywood method, imparting a cohesive structure to the final bread product. The fatty structure of the dough helps to form lipophilic regions where water molecules are trapped, inhibiting its ability to rise, but contributing to the formation of a denser and more cohesive crumb structure in the final bread product. In addition, the addition of a fatty phase helps to reduce the percentage of water in the mixture and in the produced dough. The increase in the fatty phase contributes to the reduction of the available free water of the final product, reducing the Aw. This parameter allows the adjustment of the Aw of the bread to 0.90-0.92, so that it matches the Aw of the filling which can be selected when the bread is used in the manufacture of ready-to-eat, bread carré products suitable for long-term storage (days or weeks) outside refrigeration. By adjusting Aw, the bread carré is preserved for longer periods of time without altering its components due to the significant reduction (up to practically zeroing) of the free water exchange between them.

The selection of the specific proportions of the raw materials for each of the bread components is made in order to achieve the nutritional value, which is presented in **Table 3,** General Embodiment. Having knowledge of **Table 3,** General Embodiment and the above range of raw materials, it is obvious and does not require any experimentation or inventive activity from the person skilled in the art regarding which quantities of each ingredient-raw material (can) be selected in order to achieve nutritional elements within the limits indicated in **Table 3,** General Embodiment. This selection of ingredients (from the above range of ingredients based on **Table 3,** General Embodiment) will simultaneously ensure the desired properties in the present invention, specifically and among others the regulation of the water activity Aw and the other quality characteristics in the final bread square product. Therefore, the inventiveness of the present invention lies in the above ingredients-ingredients and in the content of **Table 3,** General Embodiment and in the selection from their contents, as well as in the combination thereof (selection from two lists).

Instead of **Table 3,** General Embodiment, the 1st Embodiment Example of the same table can be used.

The raw materials contained in bread determine the elasticity and consistency of the bread.

The elasticity-consistency of bread can be calculated and compared with that of other types of doughs and breads through any method known in the literature. For example, it can be measured-estimated through:
- measurements of water absorption in the dough mass without changing the sticky characteristics of the dough to an acceptable degree, which is achieved by transferring energy to the dough with a value range from 8.5 to 11Wh/Kg for fermentation according to the Chorleywood method
- measurements of the fermentation time required according to the Chorleywood method (must be <=10 minutes of the hour (10'))
- measurements of dough expansion (>=100% by volume) homogeneously to produce square bread based on the geometric dimensions of a square bread baking pan (the baked bread must uniformly cover at least 95%-99% of the volume of the baking pan)

The improvement of the bread texture can be measured by measuring the size of the cells in the body of the bread. The cells must be uniform in size (approximately 0.1-0.6mm) and density (approximately 50-100/cm²). The measurement of the size and density of the bubbles can be done visually, manually or using automatic texture analyzers. It is important that the size of the cells in the bread body is smaller than approximately 0.6mm as larger cells are not suitable for use in the preparation of ready-to-eat products such as bread carré, suitable for storage in or out of refrigeration for long periods (days or weeks) before consumption. If the bread has cells larger than about 0.6mm, these function as pockets for receiving filling (e.g. sweet cream), contributing to the increase in the contact surface of the two phases (bread and cream) resulting in enhanced water exchange between the two phases causing the deterioration of the characteristics of the bread. Even if the Aw of the two phases is approximately the same (0.90-0.92), the effect of small differences in the Aw of the two phases on the water exchange between the two phases is enhanced due to the increase in the contact surface of the two phases due to the cells. Thus, maintaining the cells in the diameter range of approximately 0.1-0.6mm and a density of approximately 50-100/cm² reduces the transfer of water between the bread and the filling, contributing to the preservation of at least 80% of the qualitative-organoleptic characteristics of the bread until the end of the shelf life of the preparation, which shelf life increases to 15-22 days or more.

The above values, percentages of ingredients in the mixture, etc. are examples of implementation of the present invention and are not intended to limit the scope of the intended protection. On the contrary, the novelty of the present bread lies in the combination of the different raw materials in the mixture in order to obtain the desired properties in the bread produced from the dough and to solve the technical problems mentioned above. It is, therefore, possible for the person skilled in the art to use the aforementioned raw materials and mix and knead them in order to produce semifinished bread dough, using different proportions. In this case, which is also included in the scope of the intended protection, the produced dough and the bread that will be produced from this dough will have the properties mentioned above, to a different extent from each other. However, since the presence of the raw materials in combination with each other gives the dough and bread the desired properties, they are suitable for industrial production and use in ready-to-eat bread-type products and suitable for storage outside refrigeration for a long period of time without degradation of their quality, both in terms of their health characteristics and their organoleptic characteristics and how consumers understand them. Consequently, the modification of the aforementioned proportions, dimensions, etc. falls within the intended protection of the present invention and can be done by the person skilled in the art in order to adapt the dough and bread to specific usage patterns and to produce specific products that meet specific specifications. As the present invention aims to protect all these products, which will have the aforementioned technical characteristics, the implementation examples are not limited to the specific presentation of a mixture of raw materials for specific products but for all products that have the technical characteristics mentioned above. On the contrary, the description of embodiments which can be used in the production of bread suitable for use in potentially all products of the type of filled bread carré is desirable by the industry as it solves the problem of producing a wide range of different types of bread, each for a different use. Otherwise, the production of a wide range of different types of bread, each for a different use, could prove to be unfeasible due to the high cost of differentiation of bread production. At the same time, the differentiation of the technical characteristics between these different types of bread would be so small that it would not give the different types of bread any substantial and commercially exploitable advantage or differentiation. Therefore, the present description of the invention covers all possible modifications thereof as long as they use the materials and raw materials mentioned above.

In an alternative embodiment of bread and bakery product, which is suitable for use in sweet-filled bread carré products, the Aw of the bread or bakery product is adjusted to 0.915-0.925, preferably 0.92+/-0.03. The bread is baked by a conventional baking method using the same raw materials as in the first embodiment of bread and bakery product, and according to the nutritional characteristics of

### Table 3.

### Second Example of Bread Embodiment for Use in Filled, Ready-to-Eat Bread Carré Products

In a second example of a bread and bakery product embodiment, which is suitable for use in sweet (or savory) filled carré bread products, the Aw of the bread or bakery product is adjusted to 0.915-0.925, preferably 0.92 +/-0.03.

**Table 4: 2nd exemplary embodiment of the present invention**

| **Ingredients - 2o Exemplary Embodiment** | **% wt.** |
|---|---|
| Wheat Flour 70% | 32 - 36 |
| Natural Sourdough | 29 - 35 |
| Water | 26 |
| Sugar | 8 - 12 |
| Yeast | 5 - 8 |
| Rapeseed oil | 2 - 4 |
| Gluten | 2 - 4 |
| Cornstarch | 1-2 |
| Salt | 0,8 - 1,2 |
| Preservatives | < 0,5 |
| Coloring: beta-carotene | < 0,2 |
| Flavoring | < 0,2 |

**Table 4** shows a second exemplary embodiment of the present invention, in which the ingredients are used in the specific ratio ranges shown. The specific ratios for each of the ingredients in **Table 4** are selected to achieve the nutritional value shown in **Table 3,** General Embodiment. Having knowledge of **Table 3,** General Embodiment and **Table 4,** it is obvious and does not require any experimentation or inventive activity by the person skilled in the art as to what amounts of each ingredient in **Table 4** (can) be selected to achieve nutritional values within the ranges shown in **Table 3,** General Embodiment. This selection of ingredients (from **Table 4** based on **Table 3,** General Embodiment) will simultaneously ensure the desired properties in the present invention, specifically and among others the regulation of the water activity Aw and other quality characteristics in the final bread product. Therefore, the inventiveness of the present invention lies in the content of **Tables 3** and **4** and in the selection from their contents, as well as, in the combination thereof (selection from two lists).

In the 2nd embodiment example, rapeseed oil is used as a vegetable fat and calcium propionate and/or potassium sorbate are also added as preservatives, β-carotene as a coloring agent, and flavorings. All weight ratios are approximate.

### Third Exemplary Implementation of Sweet Spread

In a third example of sweet spread implementation, the Aw of the spread is adjusted to 0.89-0.91, preferably 0.90 +/-0.03.

The sweet spread includes chocolate and nuts, which provide the final product with superior organoleptic characteristics, improved structure and chocolate flavor, accompanied by a nut flavor and a combination of the organoleptic characteristics of these two raw materials in relation to the relevant products and inventions known from the literature. It also contains excess water as a raw material, which allows the Aw of the sweet spread to be adjusted to 0.89-0.91 (preferably 0.90 +/- 0.03) so that it approaches or even equals the Aw of the selected bread with which it will come into contact (e.g. toast bread or another type of bread, both with a modified Aw equal to 0.90-0.92).

The spread consists of the following necessary raw materials: water (approximately 20%-30% by weight -wt.- in the spread), sweetener, milk and hazelnut or peanut paste or other nut (e.g. sesame tahini) or fruit paste-puree or jam. Milk is an optional ingredient.

Optionally, one or more of the following ingredients may also be added to the above ingredients: chocolate-chocolate mixture base (enhancing the organoleptic profile of structure-texture and taste of the final product), corn starch, flavorings (enhancing the organoleptic taste profile of the final product) and an acidity regulator maintaining the pH in the range of 5.2 - 5.7 in order to provide the final product with greater microbiological stability and safety).

In different exemplary embodiments, the sweetener is glucose syrup or another sweetener (e.g. sucralose), and the chocolate may be selected between dark or white, or a mixture of the two or an imitation or substitute for chocolate or ganache. Hereinafter, unless otherwise specified, the term "chocolate" is used to denote white or dark chocolate, imitation or substitute chocolate, or ganache or a mixture thereof.

The final product (i.e. the sweet spread) has a particle size of approximately 20µm as this helps the product to acquire a smooth texture and cohesive structure, which remain stable for a long time, thus increasing the shelf life of the finished spread.

Chocolate typically contains sugar, cocoa butter, cocoa, milk (in powder or liquid form), lecithin (soy or other origin) and cocoa-based or vanillin-based flavorings.

The innovation of the present sweet spread lies in the excess water contained in the spread and which is combined with the hazelnut paste (and optionally with the chocolate base and starch). The result of this combination is, on the one hand, the adjustment of the Aw of the spread to 0.89-0.91 and, on the other hand, the imparting to the spread a smooth texture and cohesive structure which remains stable for a long time (e.g. 15-25 days), thus increasing the shelf life of the ready-made spread. The cohesive structure of the ready-made cream is the result of the emulsification which the water contained in the spread undergoes, as part of the water contained in the spread is trapped in the glucose syrup (approximately 20% by weight of the syrup) (or in any other sweetener used). In the case where the spread also contains corn starch, this acts as a stabilizer which promotes the maintenance of the physicochemical state of the spread. During the production process, the aqueous solution is pasteurized at 85°C. In this case, the starch is gelatinized by binding quantities of water to its mass. This process contributes to the increase in viscosity and the reduction of the fluidity of the produced cream. This system significantly helps in mixing with the fatty phase of the chocolates through stirring. Furthermore, through the application of vacuum, emulsification of the mixture is achieved, achieving communication of the two phases in the absence of separations. In the absence of cornstarch (or other starch), the two phases would not be able to mix and the liquid phase would separate from the fat phase immediately after mixing the respective raw materials or shortly thereafter. This separation would degrade the texture of the spread and facilitate the growth of mold and other pathogenic microorganisms, rendering the spread unsuitable for use or at least degrading its organoleptic characteristics to the point where it would not be possible to sell and/or consume it.

Through the emulsification of the water and fat phase contained in the spread, the spread can be preserved without degradation of its organoleptic characteristics, as well as its Aw can be adjusted to 0.89-0.91 to be suitable for use in ready-to-use sweet spread bread carré products, suitable for storage outside refrigeration for days or weeks. The compatibility of the spread with toast bread in ready-to-use sweet spread bread carré products is also ensured due to its cohesive structure and smooth texture, characteristics that prevent the spread from penetrating the air bubbles of the bread. In this way, the contact surface of the spread with the contact surface of the bread is reduced and consequently the exchange of free water from the bread to the spread is reduced (or even slowed down) in the case where there are small differences between the Aw of the bread and the spread. This ensures the nutritional safety and quality of the final product.

**Table 5: Nutritional characteristics of sweet spread**

| **NUTRITIONAL VALUE** | **General Example (% wt.)** | **3^{rd} EXEMPLARY EMBODIMENT (% wt.)** |
|---|---|---|
| Energy | 380 - 420 kcal | 402 kcal |
| Fats | 25.0 - 30.0 | 26 |
| of which saturated | 10.0 - 14.5 | 13.6 |
| Carbohydrates | 37.0 - 42.0 | 38.0 |
| Dietary fiber | 1.5 - 2.4 | 1.7 |
| Proteins | 4,4 - 4,5 | 5.0 |
| Salt | 0.2 - 0.6 | 0.4 |

The mixture of raw materials can be varied in the proportion of the above raw materials with the aim of achieving the nutritional characteristics of **Table 5,** General Example. It is known to those skilled in the art how, based on **Table 5,** General Example and 3rd Embodiment Example, one or more sweet spread recipes according to the present invention can be created, using the aforementioned ingredients, without requiring experimentation beyond a usual routine of mixing known raw materials with known nutritional value each.

However, what is neither known nor obvious to the skilled person is the selection and combination of the above-mentioned minimally necessary raw materials or optional raw materials to solve the technical problem without knowledge of the information contained in **Table 5.**

The above values, percentages of ingredients in the mixture, etc. are examples of implementation of the present invention and are not intended to limit the scope of the intended protection. On the contrary, the novelty of the present sweet spread lies in the combination of the different raw materials in the sweet spread in order to obtain the desired properties in the spread produced and to solve the technical problems mentioned above. It is, therefore, possible for the person skilled in the art to use the aforementioned raw materials and mix them for the purpose of producing a spread, using different proportions. In this case, which is also included in the scope of the intended protection, the produced spread will have the properties mentioned above, to a different extent from each other. However, since the presence of the raw materials in combination with each other gives the spread the desired properties, it is suitable for industrial production and use in ready-to-eat bread square products and suitable for storage outside refrigeration for a long period of time without degradation of their quality, both in terms of their health characteristics and their organoleptic characteristics and how consumers understand them. Consequently, the modification of the aforementioned proportions, dimensions, etc. falls within the intended protection of the present invention and can be done by the person skilled in the art in order to adapt the spread to specific patterns of use and to produce specific products that meet specific specifications. As the present invention aims to protect all these products, which will have the aforementioned technical characteristics, the implementation examples are not limited to the specific presentation of a mixture of raw materials for specific products but for all products that have the technical characteristics mentioned above. On the contrary, the description of embodiments that can be used in the production of a spread suitable for use in potentially all filled bread square products is desirable by the industry as it solves the problem of producing a wide range of different types of spreads, each for a different use. Otherwise, the production of a wide range of different types of spreads, each for a different use, could prove to be unfeasible due to the high cost of differentiation in bread production. At the same time, the differentiation of the technical characteristics between these different types of spreads would be so small that it would not give the different types of spreads any substantial and commercially exploitable advantage or differentiation. Therefore, the present description of the invention covers all possible modifications thereof as long as they use the raw materials mentioned above.

In an alternative exemplary embodiment of a sweet spread, the spread contains the ingredients of the third exemplary embodiment according to the nutritional characteristics of **Table 5,** 3rd Embodiment.

In another alternative exemplary embodiment of a sweet spread, the spread contains the ingredients of the third exemplary embodiment according to the nutritional characteristics **of Table 5,** General Embodiment or 3rd Embodiment, except for the hazelnut paste which is replaced by any other nut paste or by a paste of a mixture of different nuts, or by fruit puree or jam. The Aw of the sweet spread is 0.89-0.91 preferably 0.90 +/-0.03.

### Fourth, Fifth and Sixth Exemplary Embodiments of a Sweet Spread

In the fourth, fifth and sixth exemplary embodiments of a sweet spread, the spread contains the ingredients of the corresponding column of **Table 6,** according to the nutritional characteristics of **Table 5,** General Embodiment. The Aw of the sweet spread is 0.89-0.91, preferably 0.90 +/-0.03.

**Table 6: 4th, 5th and 6th exemplary embodiments of the present invention**

| **Ingredients** | **4**^{**t**h} **Exemplary Embodiment (% wt.)** | **5^{th} Exemplary Embodiment (% wt.)** | **6^{th} Exemplary Embodiment (% wt.)** |
|---|---|---|---|
| Chocolate (Imitation, White) | 38 - 44 | - | - |
| Chocolate (Imitation, Milk) | - | 40 - 46 | 40 - 46 |
| Hazelnut Paste | 24 - 29 | 20 - 24 | - |
| Peanut/Pistachio Paste | - | - | 20 - 24 |
| Water | 24 | 26 | 26 |
| Glucose | 8 - 12 | 8 - 12 | 8 - 12 |
| Tara Gum | <= 0,5 | <= 0,5 | <= 0,5 |
| Sorbic acid | <= 0,2 | <= 0,2 | <= 0,2 |
| Salt and Hazelnut Flavor | <= 0,1 | <= 0,1 | - |
| Chlorophyll Coloring | - | - | <= 0,1 |

**Table 6** presents three exemplary embodiments of the present invention, the 4th (hazelnut spread with imitation white chocolate), the 5th (hazelnut spread with imitation milk chocolate) and the 6th exemplary embodiment (peanut spread with imitation milk chocolate).

**Table 6** presents 4th, 5th, and 6th exemplary embodiments of the present invention, in which the ingredients (other materials) are used in the specific ratio ranges presented. The selection of the specific ratios for each of the ingredients in **Table 6** is made in order to achieve the nutritional value, which is presented in **Table 5,** General Embodiment. Having knowledge of **Table 5,** General Embodiment and **Table 6** it is obvious and does not require any experimentation or inventive activity by the person skilled in the art regarding which quantities of each ingredient of the corresponding column of **Table 6** (can) be selected in order to achieve nutritional values within the limits indicated in **Table 5,** General Embodiment. This selection of ingredients (from **Table 6** based on **Table 5,** General Embodiment) will simultaneously ensure the desired properties in the present invention, in particular and among others the regulation of the water activity Aw and the other quality characteristics in the final bread product. Therefore, the inventiveness of the present invention lies in the content of **Tables 5** and **6,** and in the selection and combination of the two tables (selection from two lists).

All weight ratios are approximate.

### Sealing of Bread Carré Products with Sweet Spread

The present invention relates to a bread product with a sweet spread filling, which is sealed peripherally by pressing on the respective peripheral zones of the slices of bread used.

To create the present invention, use is made of toast bread without a crust (i.e. the bread is only made of crumbs), which in addition to its superior taste provides the advantage that the slices can be secured together more effectively by pressing together in the respective peripheral zones. The bonding and sealing of the slices are achieved due to the moisture contained in the bread and can be enhanced by creating folds along the sealing zone. These folds facilitate the creation of a stronger bond between the slices of bread by increasing the bonding surface, and operate on the condition that the bread to be sealed is fresh.

In practice, however, this method of bonding-securing the bread slices of the final product, although functional, is not sufficiently safe and often the slices are detached from each other under the influence of mechanical stresses and due to the transfer of water between the bread and the sweet spread.

It is known in the literature that in order to avoid the transfer of water between the bread and the sweet spread, the product is frozen or the sweet spread (e.g. fruit jam) is completely covered by a fatty spread (e.g. peanut butter) so that the sweet spread does not come into contact with the bread. In both of these cases, the taste of the product is altered while the problems of free water transfer between the bread and the spread are not solved. Therefore, both the problem of possible unsealing of the sealed sandwich and the problem of preserving the sandwich outside refrigeration without deterioration of its components are maintained.

The present technical solution solves the problem of unsealing of the structural elements (i.e. the slices of bread) of the final product of the bread carré type, through the matching or equalization of the Aw of the bread with that of the sweet spread and the use of an improved sealing zone with the parallel absence of crust from the bread, which allows for safer securing of the product. Thus, the final product is kept structurally stable and is not disassembled by mechanical stresses to which it may be subjected during its transport and storage, while at the same time all its quality characteristics are maintained and the reproduction of mold, etc. pathogenic microorganisms is discouraged during storage outside refrigeration.

In another embodiment of the invention, the durability of the bread carré's bonding is improved by removing air during its sealing, which is achieved by partially compressing the bread on the surface that does not seal and which is located on either side of the sweet spread.

### Fifth Example of Implementation of Sealed Products of the Bread Carré Type with Sweet Spread

The innovation of the present invention lies in the combination of bread and sweet spread with specific characteristics (Aw, texture, granulometry, dimensions of bread cells), with a specific method of spreading, cutting and sealing the bread carré which solve the aforementioned technical problems, as well as in the use of bread and sweet spread with approximately the same Aw and composition, such as e.g. that presented in the previous examples of implementation of bread and sweet spread.

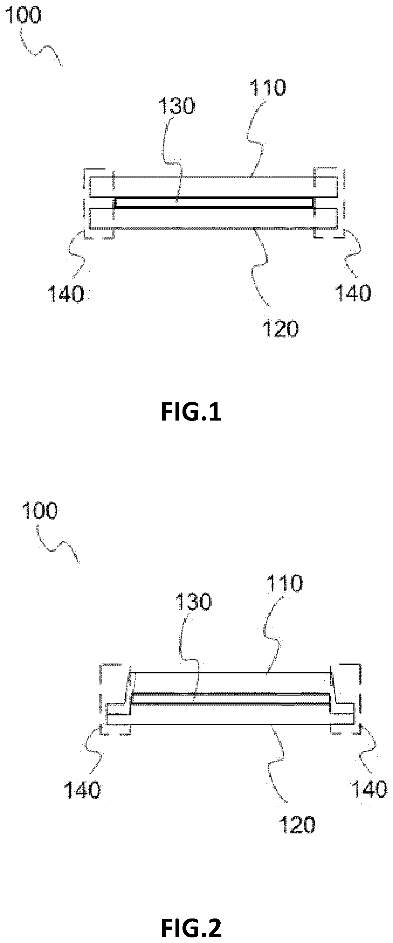

**Figure 1** shows in cross-section a bread carré type product according to the present invention, before its sealing. The bread carré (100) consists of two identical slices of bread (110), (120) which are depicted without crust. The slices (110), (120) enclose a sweet spread (130). The spread (130) is placed within the two slices of bread (110), (120) in such a way that it is surrounded by a zone of bread (140) on each slice, where no filling (130) is interposed between the zone (140) of the slice (110) and the zone (140) of the slice (120). The zone (140) is the sealing zone of the product, where the zone (140) of the slice (110) locks with the zone (140) of the slice (130), so as to hold the finished bread carré secured and to ensure that the sweet spread (130) cannot leak from the sealed bread carré which is illustrated in section in **Figure 2****.**

**Figure 2** shows the sealed bread carré in section. The sealing is done in such a way that one slice of bread (110) of the bread carré is shaped under the pressure of its sealing zone (140) and this sealing zone locks with the correspondingly shaped sealing zone (140) of the other slice (120). When the sealing zones (140) of the slices (110), (120) are secured, they have acquired and maintain reduced cross-sectional dimensions (thickness) along the axis of application of sealing pressure due to the plastic deformation which they have undergone due to the pressure applied. The slice (110) has also been shaped on its largest surface, outside its sealing zone (140), so as to have a three-dimensional shape capable of accommodating the entire filling (130) and preventing its leakage. At the same time, the slice (120) is essentially not shaped and maintains its original shape on the surface outside its sealing zone (140),

In a variation of the present exemplary embodiment of the present innovative solution, during the sealing of the bread square (100), the slice (120) is also three-dimensionally shaped on the surface outside its sealing zone (140) in a manner corresponding or similar to the deformation of the slice (110), so that the cavity created by the shaped surfaces on the corresponding surfaces outside the sealing zone (140) of the slices (110), (120) their surfaces has a three-dimensional shape capable of accommodating the entire filling (130),

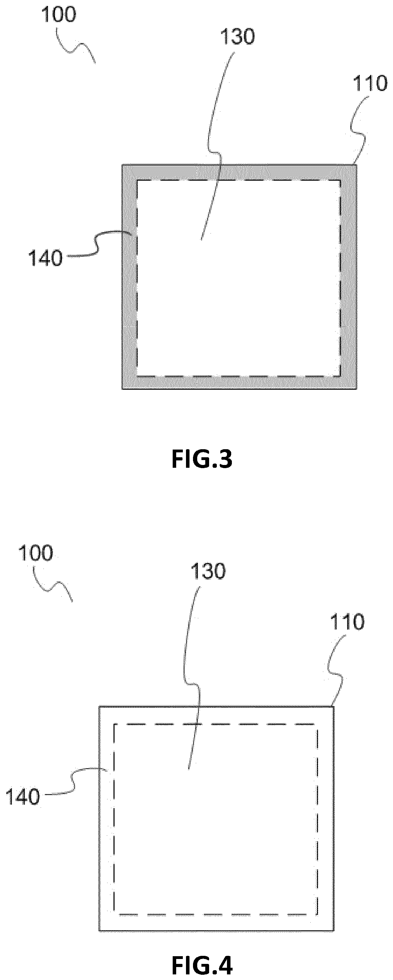

**Figure 3** shows in a top view, a bread square type product according to the present invention, before its sealing.

**Figure 4** shows a top plan view of a bread square product according to the present invention, after sealing.

The bread used in the sealed bread carré is bread prepared according to the first or second embodiment, which has an Aw of 0.915-0.925, preferably 0.92 +/-0.03, and the sweet spread is a spread prepared according to the third or fourth embodiment, which has an Aw of 0.89-0.91, preferably 0.90 +/-0.03. With these combinations, the Aw of the bread and the sweet spread are matched so that they do not exchange free water and the organoleptic characteristics of the final product of the sealed bread carré with sweet spread are not altered, and they allow the final product to be kept out of refrigeration for a period of days or weeks.

Furthermore, the selected bread has uniform cell size (approximately 0.1-0.6mm) and density (approximately 50-100/cm²) as measured visually, manually or using automatic texture analyzers. The size of the cells in the bread body ensures that they are small enough so as not to function as pockets for filling (e.g. sweet nut cream), and thus not to contribute to increasing the contact surface of the two phases (bread and spread) thus further avoiding water exchange between the two phases due to minor differences in the Aw of the two phases, which would otherwise cause the characteristics of the bread to deteriorate. This ensures that at least 80% of the qualitative-organoleptic characteristics of the final product are maintained until the end of its shelf life, which increases to 15-22 days or more.

In order for the final product to seal securely and remain sealed for its entire shelf life, the bread before sealing the bread carré must be fresh (up to 12 hours after its preparation to maintain its original water content essentially unchanged) and it must be ensured that no sweet spread is inserted into the sealing zone.

### Sixth Embodiment of Sealed Bread Carré Products with Sweet Spread

In a variation of the fifth embodiment of the bread carré product, the product does not contain air pockets trapped between the surfaces of the bread and the sweet spread, where air pockets are considered to be pockets with a volume greater than the volume of the largest cell of the bread. This achieves a better seal as the surfaces of the two phases are in contact with each other and there are no air pockets between them which could potentially, under favorable mechanical stress conditions, exert pressure either from the inside of the bread square towards the sealing zone with the possible result of the seal of the bread carré being broken, or from the inside of the bread carré towards the slices of bread with the possible result of the surface of one or both slices of bread being broken. This achieves on the one hand the avoidance of leakage of the sweet spread from the inside of the sealed bread carré, on the other hand the cohesion and appearance of the bread carré are maintained. These two characteristics facilitate the preservation of the organoleptic characteristics of the final product as well as, the aesthetic result, while at the same time facilitating the consumption of the product as the sweet filling does not leak from it when the bread carré is in the consumer's hand.

### Method for the Preparation of Sealed Products of the Bread Carré Type with Sweet Spread

The innovation of the present preparation method lies in the combination of bread and sweet spread with specific characteristics (Aw, texture, granulometry, bread cell dimensions), with a specific method of spreading, cutting and sealing the bread carré which solve the aforementioned technical problems.

The method for the preparation of sealed products of the bread carré type with sweet spread includes the following steps:
Step 1: Cutting the bread into one or more portions of the two uncut slices between them.
Step 2: Cutting the two-slice portion to produce two slices optionally joined along only one side of the portion, in such a way that the junction of the two slices has a cross-section (width), at the level defined by the largest surface of each slice, greater than the cross-section (width) at the same level of the sealing zone. The cutting can be done with a knife or other cutting tool.
Step 3: Optionally, the two-slice portion enters a high-sanitary care area such as a clean room (Clean Room) class 10,000 - ISO7 (or lower ISO) with temperature conditions of approximately 20-25°C and relative humidity (RH) of approximately 60%, as described in **Table 5.**

**Table 5: High-Care Area Specifications - ISO7 Type**

| **High-Quality Healthcare Area - ISO7 type** | | |
|---|---|---|
| Air changes / hour (filtration and dehumidification) | | 20 - 40 |
| Array of filter classes in the following order | | I (M5) / II (F8) / III (H13) |
| Maximum number of particles allowed per m³ | | |
| | 0,5µm | 352.000 |
| | 1 µm | 83.200 |
| | 5 µm | 2.930 |
| Temperature (°C) | | 20 - 25 |
| Relative Humidity (%) | | 60 |

Step 4: Lifting the top slice of bread (110) (e.g., partial lifting, e.g., mechanically). When the two-slice portion is joined along one side, the lifting may be performed while the two-slice portion is traveling, in a direction aligned with the joint of the two slices, toward a "shuttle" type plate (e.g., metal, ceramic, or synthetic), which enters the two-slice groove of the bread portion from one of the two sides of the two-slice portion that are substantially perpendicular to the joint. This lift is then increased by the movement of the two-slice portion, due to the positioning of the plate at an angle to the axis of travel of the two-slice portion in such a way that the lower edge of the plate is located near the first point of contact of the two-slice portion with the plate.

The lift is such as to allow one or more nozzles to enter between the two slices of the portion.

Step 5: Insertion between the two slices of the portion of one or more nozzles for depositing one or more sweet spreads on one or both slices of the two-slice portion.

When the two-slice portion is joined along one side, and is heading towards the plate, one or more nozzles enter between the two slices of the portion and meet the two-slice portion at the same point at which the plate previously first met the two-slice portion,

Step 6: Depositing one or more sweet spreads on one or both slices of the two-slice portion. The deposition is carried out in such a way as to ensure the creation of a zone around each of the two slices of the two-slice portion, where no amount of sweet spread has been applied to this zone.

When the two-slice portion is joined along one side, and is heading towards the plate, the deposition is carried out by fixed nozzles. Alternatively, movable nozzles may be used.

The deposition can be done using one or more feed tanks which in turn are fed by one or more traction pumps, which operate under partial vacuum and each is connected to one or more (preferably) closed containers (e.g. stainless-steel metal or other containers), which are located within the clean room and each contain a sweet spread.

The operation of the pumps is controlled by a signal from a photocell placed in each of the feed tanks, in order to control the level of the remaining amount of sweet spread in the tanks and when the level drops below a predetermined threshold, the corresponding pump is activated.

Step 7: After the sweet spreads have been deposited, the two slices of the two-slice portion are joined together to enclose the sweet spreads. This process is the reverse of step 4.

Step 8: Sealing, solely by mechanical pressure, of the two slices and cutting off the outer crust of the bread and the joining of the two slices, thus producing a securely sealed bread square with sweet spread. This step is performed so that the sealing and cutting are preferably performed substantially simultaneously. They are preferably implemented substantially simultaneously using a common cutting-sealing component.

In one aspect, the sealing of the bread slices of the bread square is performed by mechanical pressure (e.g., with a piston), at a temperature of about 20-25°C and a relative humidity of about 60% for a time of about 0.8sec.

In an exemplary embodiment, the sealed bread carré with sweet spread has a square plan view.

In one aspect, the bread used in the present method of preparing the sealed bread carré with sweet spread has dimensions of approximately 282x128x128mm, the portion of two slices (partially separated from each other) has dimensions of approximately 100x23mm, the portion of two slices without crust (fully separated from each other) has dimensions of approximately 95x95x24mm and the sweet spread depositing surface has dimensions of approximately 70x70x4 mm. Consequently, the sealing zone (before sealing the bread square) has a length-width of approximately 40x30mm and a thickness of 20mm. After sealing, the combined sealing zone where the two slices seal has a maximum thickness of 21-23 mm. The thickness of the sealed bread carré outside the sealing zone, where the two slices enclose the sweet spread, is essentially approximately 27mm.

Step 9: Optionally, one or more sealed bread squares are placed in a plastic preformed thermoforming container. This application is carried out in a tray sealer machine, which has the ability to seal the bakery product under modified atmosphere (MAP) conditions. **Table 6** presents the specifications of the tray sealer machine. The machine specification numbers are approximately those reported in **Table 6.** The gas mixture of the array is a CO₂/N₂ mixture which is enclosed in the sealed container, achieving an O₂ content of < 1%. Both the packaging material of the plastic container and its flexible sealing material (film type) are of the high barrier category, thus ensuring the lowest possible gas permeability (essentially equal to almost perfect permeability for the shelf life of the bread carré), significantly contributing to the microbiological stability of the product. This almost zero permeability is necessary to ensure that the percentage of oxygen inside the sealed container is maintained above 0 (and <1%), as otherwise the Botulinum clostridia would survive, thus rendering the bread carré unfit for consumption.

**Table 6: Tray sealer machine specifications**

| Tray sealer sealing machine specifications | |
|---|---|
| Welding temperature (°C) | 120 - 130 |
| Welding time (sec) | 3 |
| Removing O₂ from the container (%) | 99,5-99,99 |
| Applied vacuum (mbar) | 60 |
| Pneumatic sealing piston pressure (bar) | 6 |
| Modified atmosphere supply (bar) | 6 |

Step 9: Optionally, the sealed bread carré (or the sealed pre-formed container containing one or more sealed bread carré) is checked by a metal detector. During this process, the product is rejected if a metal object is detected.

In the case where the check is performed on the sealed container, the check can be performed outside the clean room.

Step 10: Optionally, the sealed pre-formed container is checked by a MAP gas detection machine. During this process, the product is rejected if CO2 is detected due to ineffective sealing of the container. The check can be performed outside the clean room.

The typical shelf life of a loaf of toast without pasteurization can reach 5 days. With the present method of producing and packaging the sealed bread carré with sweet spread in high care conditions offered by the clean room, high barrier packaging, as well as, the use of modified atmosphere (MAP) with an O₂<1% percentage is approximately 3 weeks or 22 days.

The person skilled in the art understands that the above method of preparing a sealed bread carré with sweet spread can be modified in obvious ways by varying their steps and parameters, while it can be implemented using one slice of bread (which is folded in half to create a square bread product) instead of a portion of two partially separated slices or instead of two fully separated slices of bread without these actions escaping the scope of protection of the present invention.

### Alternative Method for Preparing Sealed Bread Carré Products with Sweet Spread

The alternative method for preparing sealed bread carré products with sweet spread includes the steps of the method for preparing sealed bread carré products with sweet spread except for the 8th step which is replaced by the following step, which increases the efficiency of sealing the bread carré.

Step 8a: Sealing, exclusively by mechanical pressure, the two slices and cutting off the outer crust of the bread and the union of the two slices, as well as, pressing the two slices on the surface outside the sealing zone in order to remove air pockets trapped between the surface of the bread slice and the sweet spread. This step is based exclusively on the elastic deformation of the bread on the surface outside the sealing zone.

From one point of view, to remove the air pockets, pressure is applied (e.g. with a piston) to the surface of the slices outside the sealing zone for a time of approximately 0.8 sec, at a temperature of approximately 20 - 25°C and a relative humidity of approximately 60%. With this pressure, the two slices are elastically (and from one point of view approximately uniformly) shaped until the cross-section of the two slices (thickness) is reduced along the axis of the pressure (e.g. approximately by half). Then, due to the elasticity of the bread, the slices return to approximately their original thickness, while at the same time the surfaces of one or more layers of sweet spreads have been smoothed and the pockets have been destroyed as the air has escaped from them. This happens as the bread undergoes elastic deformation and can thus essentially recover the dimensions it had before the specific pressure was applied.

This achieves a better seal as the surfaces of the two phases are in contact with each other and there are no air pockets between them which could potentially, under favorable mechanical stress conditions, exert pressure either from the inside of the bread square towards the sealing zone with the possible result of the seal of the bread square being broken, or from the inside of the bread square towards the slices of bread with the possible result of the surface of one or both slices of bread being broken. This achieves on the one hand the avoidance of leakage of the sweet spread from the inside of the sealed bread carré, on the other hand the cohesion and appearance of the bread carré are maintained. These two features facilitate the preservation of the organoleptic characteristics of the final product, as well as, the aesthetic result, while at the same time facilitating the consumption of the product as the sweet filling does not leak from it when the bread carré is in the consumer's hand.

This step is performed so that the sealing, cutting, and destruction of the pockets are preferably performed substantially simultaneously. They are preferably implemented substantially simultaneously using a common cutting-sealing-pressing device on the surface of the slices outside the sealing zone.

The sealing is done by pressure (e.g. with a piston), at a temperature of about 20 - 25°C and a relative humidity of about 60% for a time of about 0.8sec.

**In** an exemplary embodiment, the sealed bread carré with sweet spread has a squared plan view.

The examples used above to describe the present innovative solution should not be considered as limiting the scope of application of the present innovative solution. The present innovative solution can be applied in other scenarios and settings than those described in the examples presented above. The present innovative solution should be considered as applicable in combination of any type of bread or bakery product and sweet spread.

The average person with relevant knowledge of the prior art understands that the shape, proportions and dimensions of the parts of the present invention, as presented in the exemplary embodiments, can be modified without departing from the scope and intended protection of the present invention.

The above descriptions of exemplary embodiments are simplified and do not include parts used in the embodiment but do not form part of the present invention, are not necessary for understanding the invention and are obvious to the average person with relevant knowledge of the prior art relating to the invention. In addition, variations of the exemplary embodiments are possible where, for example, certain elements of the exemplary embodiments may be rearranged, omitted and replaced with equivalents or new ones may be added, as well as, existing elements may be interconnected in a manner different from that described, provided that the different interconnection is compatible with the technical effect that the elements of the invention have, being technical features of the invention. Similarly, the modification of the shape and dimensions of the presented parts is considered to fall within the scope of protection of the present innovative solution to the extent that these modifications are obvious to persons skilled in the relevant art and to the extent that these modifications are equivalent to the exemplary embodiments presented or do not add tangible and unexpected or non-obvious improvements to the technical result they offer. Thus, the present text is not intended to be limited to the embodiments of the invention presented but should be accorded the widest possible scope consistent with the principles and novel features it discloses.

Unless specifically stated otherwise, it is the intention of the inventor to give to the words and phrases used in the description of the invention and in the claims the ordinary and commonly accepted meanings ascribed to them by an average person having relevant knowledge of the state of the art to which the present invention relates.

The foregoing description of a preferred embodiment and the best mode of carrying out the invention known to the applicant at the time of filing the application has been presented and is intended for the purposes of illustration and description. It is not intended to be exhaustive or to limit the invention to the precise form disclosed, and many modifications and variations are possible in light of the above teachings. The embodiment was chosen and described to best explain the principles of the invention and its practical application and to enable others skilled in the art to better utilize the invention in various application scenarios and modes of use and with various modifications as are appropriate to the particular use contemplated. Therefore, it is intended that the invention is not limited to the specific details disclosed for the embodiment of the invention, but that the invention includes all that fall within the scope of the appended claims.

## Claims

1. Bread carré (self-sealed sandwich with special technical and quality characteristics) (100) with a sweet filling, ready to eat, with a shelf life of 15-25 days at room temperature, which bread carré (100) consists of (a) a first slice of bread (110) and a second slice of bread (120) of toast type, and (b) a sweet filling (130), placed between the first slice of bread (110) and the second slice of bread (120), wherein:
the first slice of bread (110) and the second slice of bread (120) are only crumbs;
each slice of bread (110), (120) is surrounded by a bread sealing zone (140);
the sweet filling (130) is placed on at least one of the bread slices (110), (120) and is surrounded by the sealing zone (140) of the first bread slice (110) and by the sealing zone (140) of the second bread slice (120) in such a way that in the self-sealing bread carré (100) no sweet filling (130) is interposed between the sealing zones (140) of the first bread slice (110) and the second bread slice (120);
the sealing zone (140) of the first slice of bread (110) is irreversibly sealed to the sealing zone (140) of the second slice of bread (120) exclusively by means of moisture contained in the slices of bread (110), (120) and plastic deformation of the sealing zones (140) caused by applying pressure to the sealing zones (140) along an axis perpendicular to the largest surface of each of the slices (110), (120) of the bread carré (100);
the first slice of bread (110) is shaped on its largest surface, except for its sealing zone (140), for having a three-dimensional shape capable of accommodating the entire sweet filling (130) and preventing its leakage;
the first slice of bread (110) and the second slice of bread (120) are prepared from bread baked up to about 12 hours before being sealed together, for maintaining their original water content substantially unchanged; and
each of the first slice of bread (110), the second slice of bread (120) and the sweet filling (130) has a water activity (Aw) of 0.90-0.92.

2. Bread carré (100) according to claim 1, wherein each of the first slice of bread (110), the second slice of bread (120) and the sweet filling (130) has a water activity (Aw) of 0.92 +/-0.03.

3. Bread carré (100) according to any of the preceding claims, wherein the second slice of bread (120) is also shaped on its largest surface, outside its sealing zone (140), in a manner corresponding or similar to the shaping of the first slice of bread (110), so that a cavity created by the shaped slices (110), (120) on their respective surfaces outside their sealing zone (140) has a three-dimensional shape capable of accommodating the entire sweet filling (130) and preventing its leakage.

4. Bread carré (100) according to any of the preceding claims, wherein the sealed bread carré (100) is free of air pockets trapped between the surfaces of the first slice of bread (110), the second slice of bread (120) and the sweet filling (130), wherein air pockets are considered to be pockets with a volume greater than the volume of a largest air cell of the first (110) and the second (120) slices of bread.

5. Bread carré (100) according to any of the preceding claims, wherein the first slice of bread (110) and the second slice of bread (120) are made from bread comprising air cells of uniform size of about 0.6-0.8mm, with a density of about 50-100/cm².

6. Bread carré (100) according to any of the preceding claims, wherein the first slice of bread (110) and the second slice of bread (120) are prepared from bread comprising:
wheat flour about 32-36% wt.;
natural sourdough about 29-35% wt.;
water about 26% wt.;
sugar about 8-12% wt.;
yeast about 5-8% wt.;
rapeseed oil about 2-4% wt.;
gluten about 2-4% wt.;
corn starch about 1-2% wt.;
salt about 0.8-1.2% wt.;
preservatives about < 0.5% wt.;
colorant: beta-carotene about < 0.2% wt.; and
flavoring about < 0.2% wt.

7. Bread carré (100) according to any of claims 1-5, wherein the sweet filling (130) comprises:
white chocolate imitation about 38-44% wt.;
hazelnut paste about 24-29% wt.;
water about 24% wt.;
glucose about 8-12% wt.;
Tara gum about <= 0.5% wt.;
sorbic acid about <= 0.2% wt.; and
salt and hazelnut flavor about <= 0.10% wt.

8. Bread carré (100) according to any of claims 1-5, wherein the sweet filling (130) comprises:
milk chocolate imitation about 40-46% wt.;
hazelnut paste about 20-24% wt.;
water about 26% wt.;
glucose about 8-12% wt.;
Tara gum about <= 0.5% wt.;
sorbic acid about <= 0.2% wt.; and
salt and hazelnut flavor about <= 0.10% wt.

9. Bread carré (100) according to any of claims 1-5, wherein the sweet filling (130) comprises:
milk chocolate imitation about 40-46% wt.;
peanut paste about 20-24% wt.;
water about 26% wt.;
glucose about 8-12% wt.;
Tara gum about <= 0.5% wt.;
sorbic acid about <= 0.2% wt.; and
chlorophyll pigment about <= 0.10% wt.

10. Method for preparing a bread carré (self-sealed sandwich of specific technical and quality characteristics) (100) with a sweet filling (130) according to any of the preceding claims, the method comprising the following steps:
providing a first slice of bread (110), positioned and aligned in contact with a second slice of bread (120);
separating the first slice of bread (110) from the second slice of bread (120);
depositing at least one sweet filling (130) on the first slice of bread (110) and/or on the second slice of bread (120), in such a way as to ensure the absence of the at least one sweet filling (130) between the sealing zones (140) of the first slice of bread (110) and the second slice of bread (120), respectively; joining and aligning the first slice of bread (110) and the second slice of bread so as to enclose the at least one sweet filling (130) between them; and
irreversibly sealing the sealing zone (140) of the first slice of bread (110) to the sealing zone (140) of the second slice of bread (120) exclusively by applying pressure to the sealing zones (140) along an axis perpendicular to the largest surface of each of the slices (110), (120) of the bread carré (100), wherein the pressure, in combination with moisture contained in the slices of bread (110), (120), causes plastic deformation of the sealing zones (140), and wherein the pressure shapes the first slice of bread (110) over its largest surface, except for its sealing zone (140), so that the shaped surface takes on a three-dimensional shape capable of accommodating the entire filling (130) and preventing leakage of the filling.

11. Method according to claim 10, the method further comprising the following steps:
applying pressure to the surface outside the sealing zone (140) of the first bread slice (110), and/or the second bread slice (120), to elastically deform the pressured surface until the cross-section (thickness) of the first bread slice (120) and the second bread slice (120) is reduced along the axis of application of pressure, so as to smooth the surfaces of the at least one sweet filling (130) and to destroy and expel air from air pockets between the surfaces of the first bread slice (120), the second bread slice (120) and the at least one sweet filling (130); and
ceasing to apply pressure to the surface outside the sealing zone (140) of the first slice of bread (120), and/or the second slice of bread (120).

12. Method of preparation according to any of claims 10-11, the method further comprising the following steps:
cutting bread with crust into at least one portion of two uncut slices between them;
partially cutting the at least one portion into a first slice (110) and a second slice (120), joined together only along one side of the portion, in such a way that the junction of the two slices (110), (120) has a cross-section (width), in the plane defined by the largest surface of each slice, greater than the cross-section (width) in the same plane of the sealing zone (140); and
lifting the first slice of bread (110) to separate it from the second slice of bread (120), maintaining the union of the two slices (110), (120) along one side of the portion, so that the two slices (110), (120) remain aligned with each other;
wherein cutting the crust precedes securing the two slices (110), (120).

13. Method of preparation according to claim 12, the method further comprising the following steps:
inserting at least one nozzle between the two raised slices (110), (120) of the portion; and
depositing at least one sweet filling (130) on the at least one raised slice (110), (120) via the at least one nozzle, in such a way as to ensure the absence of the at least one sweet filling (130) between the sealing zones (140) of the first slice of bread (110) and the second slice of bread (120), respectively.

14. Method of preparation according to any of claims 10-13 wherein all steps of the method are performed in a high-sanitary care environment such as a clean room of class 10,000 - ISO7, or lower ISO, at a temperature of about 20-25°C and a relative humidity (RH) of about 60%.

15. Method of preparation according to any of claims 12-14, wherein the sealing of the two slices (110), (120) and the cutting of the crust are performed simultaneously.

16. Method of preparation according to any of claims 10-15, wherein the sealed bread carré (100) has a square cross-section at its largest surface.

17. Method of preparation according to any of claims 10-16, wherein the sealing of the zones (140) is carried out by mechanical pressure at a temperature of about 20-25°C and a relative humidity of about 60%, for a time of about 0.8sec.
